# EUROPEAN PATENT APPLICATION

(11) **EP 4 513 844 A1**
(43) Date of publication of application: **26.02.2025**
(21) Application number: 23802805.4
(22) Date of filing: 06.05.2023
(51) Int. Cl.: H04L 41/14, H04B 10/077

(54) **OPTICAL COMMUNICATION METHOD AND RELATED DEVICE**

(30) Priority: 13.05.2022 CN 202210521193
(71) Applicant: Huawei Technologies Co., Ltd., Shenzhen, Guangdong 518129 (CN)
(72) Inventor: YU, Fei, Shenzhen, Guangdong 518129 (CN); HUANG, Huoqing, Shenzhen, Guangdong 518129 (CN); XIAO, Congtu, Shenzhen, Guangdong 518129 (CN); ZHAO, Junying, Shenzhen, Guangdong 518129 (CN); SU, Changzheng, Shenzhen, Guangdong 518129 (CN); DU, Anxue, Shenzhen, Guangdong 518129 (CN)
(74) Representative: Gill Jennings & Every LLP
(86) International application number: PCT/CN2023/092504
(87) International publication number: WO 2023/217033

(57) **Abstract**

Embodiments of this application disclose an optical communication method and a related apparatus. The method is applied to an optical communication system. The optical communication system includes a first component, a second component, and an optical connection assembly that connects the first component and the second component. The method includes: controlling a first component to send a first optical signal to a second component through the optical connection assembly; sending an alarm indication when it is determined, based on an optical power variation status of the first optical signal in a transmission process, that the optical connection assembly is abnormal; and when it is determined, based on the optical power variation status of the first optical signal in the transmission process, that the optical connection assembly is normal, controlling the first component to send a second optical signal to the second component, where an optical power of the second optical signal is greater than an optical power of the first optical signal. In this application, costs of detecting an optical path exception of an optical connector can be reduced, and an exception can be detected in time.

## Description

This application claims priority to Chinese Patent Application No. 202210521193.X, filed with the China National Intellectual Property Administration on May 13, 2022 and entitled "OPTICAL COMMUNICATION METHOD AND RELATED APPARATUS", which is incorporated herein by reference in its entirety.

### TECHNICAL FIELD

The present invention relates to the field of optical communication technologies, and in particular, to an optical communication method and a related apparatus.

### BACKGROUND

In an optical communication system, an optical fiber connector is necessary. The optical connector is a component for detachable connection between optical fibers. The optical connector can precisely connect two end faces of the optical fibers, so that optical energy output by a transmit optical fiber can be coupled to a receiving optical fiber to the maximum extent, and impact on the system caused by the optical connector accessing to an optical link is minimized. This is a basic requirement for the optical connector. To some extent, the optical connector affects reliability and performance of the optical transmission system.

If there are pollutants such as dust on an optical path of the optical connector, because the pollutants cannot bear high optical energy density, problems such as burning easily occur in a high-power optical transmission process. Consequently, optical signal transmission is severely affected. In an existing solution, an instrument is used to determine whether an optical path of an optical connector is abnormal. However, the detection instrument is expensive, manual detection is required, and an exception cannot be detected in a timely manner. Therefore, how to reduce detection costs and detect an exception in a timely manner is a technical problem that needs to be urgently resolved by a person skilled in the art.

### SUMMARY

Embodiments of this application disclose an optical communication method and a related apparatus, to reduce costs of detecting an optical path exception of an optical connector, and an exception can be detected in time.

According to a first aspect, an embodiment of this application provides an optical communication method applied to an optical communication system. The optical communication system includes a first component, an optical connection assembly, and a second component, and the first component and the second component are connected by the optical connection assembly. The method includes:
controlling the first component to send a first optical signal to the second component through the optical connection assembly;
sending an alarm indication when it is determined, based on an optical power variation status of the first optical signal in a transmission process, that the optical connection assembly is abnormal; and
when it is determined, based on the optical power variation status of the first optical signal in the transmission process, that the optical connection assembly is normal, controlling the first component to send a second optical signal to the second component, where an optical power of the second optical signal is greater than an optical power of the first optical signal.

Optionally, the first optical signal does not cause damage to the optical communication system. Optionally, the optical power of the first optical signal is less than 10 dBm.

In this solution, detection is performed on the optical connection assembly by using a low-power optical signal (that is, the first optical signal). If it is detected that the optical connection assembly is abnormal, an alarm is generated. If it is detected that the optical connection assembly is normal, transmission of a high-power optical signal (that is, the second optical signal) starts. This avoids a problem that the optical connection assembly is burnt because a high-power optical signal is directly transmitted while an exception of the optical connection assembly is not perceived. In addition, in this solution, an insertion loss variation value of the optical connection assembly is measured based on the optical power variation status of the optical signal in the transmission process, and whether the optical connection assembly is abnormal is determined based on the variation value. Compared with an existing solution in which an instrument is used to detect whether an optical path of an optical connection assembly is abnormal, because manual detection and an expensive detection instrument are not needed in this solution, this solution is labor-saving and has lower costs, and this solution has higher detection accuracy, so that an exception can be detected in a timely manner.

In a possible implementation, the optical power variation status of the first optical signal in the transmission process is obtained by using the following method:
obtaining a first optical power and a second optical power, where the first optical power is an optical power of the transmitted first optical signal at a first interface that connects the first component and the optical connection assembly, and the second optical power is an optical power of the transmitted first optical signal at a second interface that connects the second component and the optical connection assembly; and
calculating the variation status based on the first optical power and the second optical power.

Optionally, the calculating the variation status based on the first optical power and the second optical power includes: calculating a first insertion loss value of the optical connection assembly based on the first optical power and the second optical power; calculating an insertion loss variation value of the optical connection assembly based on the first insertion loss value and a preset insertion loss value of the optical connection assembly, where the preset insertion loss value is read from a register of the optical communication system, and the insertion loss variation value indicates the variation status.

In this solution, the optical powers of the transmitted first optical signal at the input interface and the output interface of the optical connection assembly may be first calculated, so that a current insertion loss value of the optical connection assembly may be calculated, and then a current insertion loss variation value of the optical connection assembly may be calculated.

In a possible implementation, the first component includes a first monitor detector, and the obtaining a first optical power includes:
calculating the first optical power based on a third optical power and a first fixed value, where
the third optical power is an optical power of a third optical signal obtained through detection by the first monitor detector, the third optical signal and the first optical signal are two optical signals obtained through splitting an optical signal in the first component based on powers, and the first fixed value is pre-stored in a register of the optical communication system.

Optionally, the first fixed value is a value of an inherent relationship between a first target optical power and a second target optical power in the first component, the first target optical power is an optical power of a first target optical signal obtained through detection by the first monitor detector, the second target optical power is an optical power of a transmitted second target optical signal at the first interface, and the first target optical signal and the second target optical signal are two optical signals obtained by splitting the optical signal in the first component based on powers.

In this solution, the third optical power is easier to obtain than the optical power at the inbound interface of the optical connection assembly. Therefore, the first optical power is calculated based on the third optical power, so that measurement costs can be reduced. In addition, in an existing implementation, because the third optical signal is the optical signal obtained by splitting the optical signal in the first component based on the powers, the optical power of the third optical signal obtained through detection by the first monitor detector is used to analyze whether the optical power of the optical signal in the first component is within a normal range. However, in this solution, the first optical power may be calculated based on the optical power obtained through detection by the first monitor detector, and then the insertion loss variation value of the optical connection assembly is calculated. In other words, in this solution, no additional optical power detection apparatus needs to be added, and the insertion loss variation value of the optical connection assembly can be calculated based on existing obtainable data in the optical communication system. In this way, hardware costs are reduced and the existing obtainable data can be repeatedly used.

In a possible implementation, the first component includes a light source, the light source includes a light source chip, the first optical signal is generated by the light source chip in the light source, and an optical power at the first interface of a transmitted optical signal generated by the light source chipis related to a temperature of the light source chip; and the obtaining a first optical power includes:
obtaining a current temperature of the light source chip; and
determining the first optical power based on the detected temperature.

In this solution, because the optical power at the inbound interface of the optical connection assembly is difficult to measure, in this solution, the optical power of the transmitted first optical signal at the inbound interface of the optical connection assembly is determined based on an inherent relationship between the temperature of the light source chip and the optical power at the first interface of the transmitted optical signal generated by the light source chip. In this way, measurement costs are reduced.

In a possible implementation, the optical power at the first interface of the transmitted optical signal generated by the light source chip is further related to a drive current and a drive voltage of the light source chip; the obtaining a first optical power further includes:
obtaining a current drive current and a current drive voltage of the light source chip; and
the determining the first optical power based on the detected temperature includes:
   determining the first optical power based on the detected temperature, drive current, and drive voltage.

Similarly, in this solution, because the optical power at the inbound interface of the optical connection assembly is difficult to measure, in this solution, the optical power of the transmitted first optical signal at the inbound interface of the optical connection assembly is determined based on inherent relationships between the temperature, the drive current, and the drive voltage of the light source chip and the optical power at the first interface of the transmitted optical signal generated by the light source chip. In this way, measurement costs are reduced.

In a possible implementation, the second component includes a second monitor detector; and the obtaining a second optical power includes:
calculating the second optical power based on a fourth optical power and a second fixed value, where
the fourth optical power is an optical power of a fourth optical signal obtained through detection by the second monitor detector, where the fourth optical signal is an optical signal obtained by splitting the first optical signal transmitted to the second component based on powers;; and the second fixed value is pre-stored in the register of the optical communication system.

Optionally, the second fixed value is a value of an inherent relationship between a third target optical power and a fourth target optical power in the second component, the third target optical power is an optical power of a third target optical signal at the second interface in the second component, the fourth target optical power is an optical power of a fourth target optical signal obtained through detection by the second monitor detector, and the fourth target optical signal is an optical signal obtained by splitting the third target optical signal based on powers.

In this solution, the fourth optical power is easier to obtain than the optical power at the outbound interface of the optical connection assembly. Therefore, the second optical power is calculated based on the fourth optical power, so that measurement costs can be reduced. In addition, in an existing implementation, because the fourth optical signal is an optical signal obtained by splitting, based on the powers, the first optical signal received from the second component, the optical power of the fourth optical signal obtained through detection by the second monitor detector is used to analyze whether the optical power of the received first optical signal is within a normal range. However, in this solution, the second optical power may be calculated based on the optical power obtained through detection by the second monitor detector, and then the insertion loss variation value of the optical connection assembly is calculated. In other words, in this solution, no additional optical power detection apparatus needs to be added, and the insertion loss variation value of the optical connection assembly can be calculated based on existing obtainable data in the optical communication system. In this way, hardware costs are reduced and the existing obtainable data can be repeatedly used.

In a possible implementation, the optical power variation status of the first optical signal in the transmission process is obtained by using the following method:
calculating the insertion loss variation value of the optical connection assembly based on a fifth optical power, a sixth optical power, a first preset optical power, and a second preset optical power, where the insertion loss variation value indicates the variation status, where
the fifth optical power is an optical power of a fifth optical signal, where the fifth optical signal and the first optical signal are two optical signals obtained through splitting an optical signal in the first component based on powers;
the sixth optical power is an optical power of a sixth optical signal, where the sixth optical signal is an optical signal obtained by splitting, based on powers, the first optical signal transmitted to the second component; and
the first preset optical power and the second preset optical power are read from a register of the optical communication system.

Optionally, the first component includes a first monitor detector, the fifth optical power is an optical power obtained by performing detection on the fifth optical signal by the first monitor detector, and the first preset optical power is an optical power obtained in advance through detection by the first monitor detector based on a test optical signal in the first component.

Optionally, the second component includes a second monitor detector, the sixth optical power is an optical power obtained by performing detection on the sixth optical signal by the second monitor detector, and the second preset optical power is an optical power obtained in advance through detection by the second monitor detector based on the test optical signal transmitted to the second component.

In this solution, the fifth optical power, the sixth optical power, the first preset optical power, and the second preset optical power are all optical powers obtained through measurement directly performed by the monitor detectors. The insertion loss variation value of the optical connection assembly may be calculated based on the optical powers obtained through direct measurement. The optical powers of the first optical signal at the input interface and the output interface of the optical connection assembly do not need to be calculated. This implementation is easy, and can improve efficiency of optical path exception detection in the optical connection assembly.

In a possible implementation, the optical communication system includes an optical module, the first component is an external laser source ELS of the optical module, and the second component is a silicon photonic chip in the optical module.

In a possible implementation, the optical communication system includes a service board, the first component is an external laser source ELS of the service board, the second component is a silicon photonic chip in the service board, and the service board is configured to process a service signal.

In a possible implementation, the optical communication system includes a backplane component, the first component is a first service board in the backplane component, the second component is a second service board in the backplane component, and the optical connection assembly includes an optical backplane in the backplane component, the first service board and the second service board are configured to process a service signal, and the optical backplane is configured to implement optical communication between the first service board and the second service board.

In a possible implementation, the optical connection assembly includes one or more of an optical fiber, an optical connector, an optical fiber board, an optical-electrical integrated connector, an optical waveguide, or the like.

The optical communication method provided in this solution may be applied to the foregoing plurality of different optical communication systems, and has a wide application scope.

According to a second aspect, an embodiment of this application further provides an optical communication system, where the optical communication system includes:
a control unit, configured to control a first component to send a first optical signal to a second component through an optical connection assembly, where the first component and the second component are connected by the optical connection assembly, and the first component, the second component, and the optical connection assembly are components in the optical communication system; and
an alarm unit, configured to send an alarm indication when it is determined, based on an optical power variation status of the first optical signal in a transmission process, that the optical connection assembly is abnormal, where
the control unit is further configured to: when it is determined, based on the optical power variation status of the first optical signal in the transmission process, that the optical connection assembly is normal, control the first component to send a second optical signal to the second component, where an optical power of the second optical signal is greater than an optical power of the first optical signal.

In a possible implementation, the optical communication system further includes a first obtaining unit configured to obtain the optical power variation status of the first optical signal in the transmission process, and the first obtaining unit is specifically configured to:
obtain a first optical power and a second optical power, where the first optical power is an optical power of the transmitted first optical signal at a first interface that connects the first component and the optical connection assembly, and the second optical power is an optical power of the transmitted first optical signal at a second interface that connects the second component and the optical connection assembly; and
calculate the variation status based on the first optical power and the second optical power.

In a possible implementation, the first component includes a first monitor detector; and
the first obtaining unit is specifically configured to:
calculate the first optical power based on a third optical power and a first fixed value, where
the third optical power is an optical power of a third optical signal obtained through detection by the first monitor detector, the third optical signal and the first optical signal are two optical signals obtained through splitting an optical signal in the first component based on powers, and the first fixed value is pre-stored in a register of the optical communication system.

In a possible implementation, the first fixed value is a value of an inherent relationship between a first target optical power and a second target optical power in the first component, the first target optical power is an optical power of a first target optical signal obtained through detection by the first monitor detector, the second target optical power is an optical power of a transmitted second target optical signal at the first interface, and the first target optical signal and the second target optical signal are two optical signals obtained by splitting the optical signal in the first component based on powers.

In a possible implementation, the first component includes a light source, the light source includes a light source chip, the first optical signal is generated by the light source chip in the light source, and an optical power at the first interface of a transmitted optical signal generated by the light source chip is related to a temperature of the light source chip; and
the first obtaining unit is specifically configured to:
obtain a current temperature of the light source chip; and
determine the first optical power based on the current temperature.

In a possible implementation, the optical power at the first interface of the transmitted optical signal generated by the light source chip is further related to a drive current and a drive voltage of the light source chip;
the first obtaining unit is specifically configured to:
obtain a current drive current and a current drive voltage of the light source chip; and
the determining the first optical power based on the detected temperature includes:
   determining the first optical power based on the detected temperature, drive current, and drive voltage.

In a possible implementation, the second component includes a second monitor detector, and the first obtaining unit is specifically configured to:
calculate the second optical power based on a fourth optical power and a second fixed value, where
the fourth optical power is an optical power of a fourth optical signal obtained through detection by the second monitor detector, where the fourth optical signal is an optical signal obtained by splitting the first optical signal transmitted to the second component based on powers;; and the second fixed value is pre-stored in the register of the optical communication system.

In a possible implementation, the second fixed value is a value of an inherent relationship between a third target optical power and a fourth target optical power in the second component, the third target optical power is an optical power of a third target optical signal at the second interface in the second component, the fourth target optical power is an optical power of the fourth target optical signal obtained through detection by the second monitor detector, and the fourth target optical signal is an optical signal obtained by splitting the third target optical signal based on powers.

In a possible implementation, the first obtaining unit is specifically configured to:
calculate a first insertion loss value of the optical connection assembly based on the first optical power and the second optical power; and
calculate an insertion loss variation value of the optical connection assembly based on the first insertion loss value and a preset insertion loss value of the optical connection assembly, where the preset insertion loss value is read from the register of the optical communication system, and the insertion loss variation value indicates the variation status.

In a possible implementation, the optical communication system further includes a second obtaining unit configured to obtain the optical power variation status of the first optical signal in the transmission process, and the second obtaining unit is specifically configured to:
calculate the insertion loss variation value of the optical connection assembly based on a fifth optical power, a sixth optical power, a first preset optical power, and a second preset optical power, where the insertion loss variation value indicates the variation status, where
the fifth optical power is an optical power of a fifth optical signal, where the fifth optical signal and the first optical signal are two optical signals obtained through splitting an optical signal in the first component based on powers;
the sixth optical power is an optical power of a sixth optical signal, where the sixth optical signal is an optical signal obtained by splitting, based on powers, the first optical signal transmitted to the second component; and
the first preset optical power and the second preset optical power are read from a register of the optical communication system.

In a possible implementation, the first component includes a first monitor detector;
the fifth optical power is an optical power obtained by performing detection on the fifth optical signal by the first monitor detector; and
the first preset optical power is an optical power obtained in advance through detection by the first monitor detector based on a test optical signal in the first component.

In a possible implementation, the second component includes a second monitor detector;
the sixth optical power is an optical power obtained by performing detection on the sixth optical signal by the second monitor detector; and
the second preset optical power is an optical power obtained in advance through detection by the second monitor detector based on the test optical signal transmitted to the second component.

In a possible implementation, the optical connection assembly includes one or more of an optical fiber, an optical connector, an optical fiber board, an optical-electrical integrated connector, an optical waveguide, or the like.

According to a third aspect, this application provides an optical interconnection processing apparatus, including a processor and a memory, configured to implement the method described in the first aspect and the possible implementations of the first aspect. The memory is coupled to the processor. When the processor executes a computer program stored in the memory, the network apparatus may be enabled to implement the method according to any one of the first aspect or the possible implementations of the first aspect.

The apparatus may further include a communication interface. The communication interface is configured for communication between the apparatus and another apparatus. For example, the communication interface may be a transceiver, a circuit, a bus, a module, or another type of communication interface. The communication interface includes a receiving interface and a sending interface. The receiving interface is configured to receive a message, and the sending interface is configured to send a message.

In a possible implementation, the apparatus is a component in an optical communication system, the optical communication system includes a first component, an optical connection assembly, and a second component, and the first component and the second component are connected by the optical connection assembly. The apparatus may include:
a memory, configured to store a computer program; and
a processor, configured to control the first component to: send a first optical signal to the second component by using the optical connection assembly; obtain an insertion loss variation value of the optical connection assembly based on an optical power variation status of the first optical signal in a transmission process, where the insertion loss variation value indicates variation of an insertion loss of the optical connection assembly compared with a preset insertion loss value; send an alarm indication when it is determined, based on the insertion loss variation value, that the optical connection assembly is abnormal; and when it is determined, based on the insertion loss variation value, that the optical connection assembly is normal, control the first component to send a second optical signal to the second component, where an optical power of the second optical signal is greater than an optical power of the first optical signal.

It should be noted that the computer program in the memory in this application may be pre-stored, or may be downloaded from the Internet and then stored when the apparatus is used. A source of the computer program in the memory is not specifically limited in this application. The coupling in this embodiment of this application may be indirect coupling or a connection between apparatuses, units, or modules in an electrical form, a mechanical form, or another form, and is used for information exchange between the apparatuses, the units, or the modules.

According to a fourth aspect, this application provides a communication device. The communication device includes an optical communication system, and the optical communication system is the optical communication system according to any implementation of the second aspect.

According to a fifth aspect, this application provides a communication device, where the communication device includes a first service board, a second service board, and an optical backplane, and the first service board and the second service board are connected by the optical backplane. The communication device implements the optical communication method according to any implementation of the first aspect based on the first service board, the second service board, and the optical backplane.

The first service board is the first component in the optical communication method according to any implementation of the first aspect, the second service board is the second component in the optical communication method according to any implementation of the first aspect, and the optical backplane is the optical connection assembly in the optical communication method according to any implementation of the first aspect.

According to a sixth aspect, this application provides a computer-readable storage medium; the computer-readable storage medium stores a computer program; when the computer program is executed by a processor, the method according to any one of the first aspect or the possible implementations of the first aspect is implemented.

According to a seventh aspect, this application provides a computer program product, including a computer program. When the computer program is executed by a processor, the computer is enabled to perform the method according to any implementation of the first aspect.

It may be understood that the entities provided in the second aspect to the seventh aspect are all configured to implement the method provided in any implementation of the first aspect. Therefore, for beneficial effect that can be achieved by the entities, refer to beneficial effect in the corresponding method. Details are not described herein again.

### BRIEF DESCRIPTION OF DRAWINGS

FIG. 1 to FIG. 5 are diagrams of an optical communication system according to an embodiment of this application;
FIG. 6A, FIG. 6B, FIG. 6C, and FIG. 6D are diagrams of a backplane component according to an embodiment of this application;
FIG. 7 is a diagram of an optical communication system according to an embodiment of this application;
FIG. 8 is a schematic flowchart of an optical communication method according to an embodiment of this application;
FIG. 9 is a diagram of an optical communication system according to an embodiment of this application;
FIG. 10 is a diagram of relationship curves according to an embodiment of this application;
FIG. 11 is a diagram of a logic structure of an apparatus according to an embodiment of this application;
FIG. 12 is a diagram of a hardware structure of an apparatus according to an embodiment of this application; and
FIG. 13 is a diagram of a structure of a communication device according to an embodiment of this application.

### DESCRIPTION OF EMBODIMENTS

The following describes embodiments of this application with reference to the accompanying drawings.

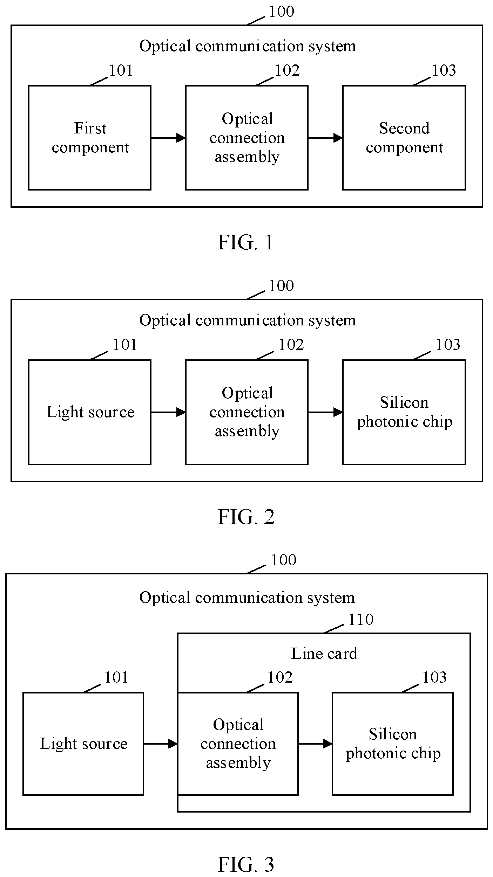

First, an optical communication system provided in an embodiment of this application is described. For example, refer to FIG. 1. As shown in FIG. 1, the optical communication system 100 provided in this embodiment of this application includes a first component 101, an optical connection assembly 102, and a second component 103. The first component 101 and the second component 103 are connected by the optical connection assembly 102, that is, an optical signal in the first component 101 is transmitted to the second component 103 through the optical connection assembly 102.

The optical connection assembly 102 may include one or more of an optical fiber, an optical connector, an optical fiber board, an optical waveguide, an optical-electrical integrated connector, an optical backplane, or the like.

Refer to FIG. 2. In a possible implementation, for example, the optical communication system 100 includes a light source 101, an optical connection assembly 102, and a silicon photonic chip 103. The light source 101 corresponds to the first component 101, and the silicon photonic chip 103 corresponds to the second component 103.

The light source 101 is configured to generate an optical signal. A generated optical signal is input to the silicon photonic chip 103 after passing through the optical connection assembly 102. The silicon photonic chip 103 is configured to process the received optical signal. For example, the silicon photonic chip 103 may perform processing such as electro-optic modulation on the received optical signal. For example, the silicon photonic chip 103 includes a silicon photonic modulator, and the silicon photonic modulator may implement electro-optic modulation of an optical signal.

For example, the light source 101 may be an external laser source (external laser source, ELS), and the external laser source may be connected to the optical connection assembly 102 in a pluggable manner.

In a possible implementation, the optical communication system 100 shown in FIG. 2 includes an optical module (optical module). The optical connection assembly 102 and the silicon photonic chip 103 are included in the optical module. The light source 101 may be an external laser source of the optical module, and is connected to the optical connection assembly 102 in the optical module in a pluggable manner.

The optical module is configured to implement conversion between an optical signal and an electrical signal. Specifically, the optical module may modulate the electrical signal to an optical signal for sending. In a specific implementation, the optical signal generated by the light source 101 is input to the silicon photonic chip 103 of the optical module after passing through the optical connection assembly 102 of the optical module. The silicon photonic chip 103 of the optical module modulates the electrical signal to the received optical signal by using the silicon photonic modulator for sending. In addition, the optical module may further convert a received optical signal into an electrical signal and demodulate the electrical signal. This is not specifically limited in this application.

Refer to FIG. 3. In another possible implementation, for example, the optical communication system 100 includes a light source 101 and a service board 110, where the service board 110 includes an optical connection assembly 102 and a silicon photonic chip 103. Similarly, the light source 101 corresponds to the foregoing first component 101, and the silicon photonic chip 103 corresponds to the foregoing second component 103.

In a specific implementation, the light source 101 is an external laser source of the service board 110, that is, the light source 101 is connected to the optical connection assembly 102 in a pluggable manner to implement connection to the service board 110. The service board 110 is configured to process a service signal, for example, implement modulation and demodulation of an optical signal. This is not limited in this application.

In a possible implementation, the silicon photonic chip 103 in the service board 110 may be an on-board optics (on board optics, OBO) module, a near-package optics (near package optics, NPO) module, a co-package optics (co-package optics, CPO) assembly, an optics electronic integrated circuit (optics electronic integrated circuit, OEIC), or the like. Alternatively, the silicon photonic chip 103 includes a silicon photonic modulation chip in the OBO module, the NPO module, the CPO assembly, or the OEIC, and the silicon photonic modulation chip includes a silicon photonic modulator.

The OBO module, the NPO module, the CPO assembly, or the OEIC may be configured to implement conversion between an optical signal and an electrical signal. Specifically, the OBO module, the NPO module, the CPO assembly, or the OEIC may modulate an electrical signal to an optical signal by using the silicon photonic modulation chip for sending, or may convert a received optical signal into an electrical signal by using a silicon photonic demodulation chip and perform demodulation. The silicon photonic modulation chip and the silicon photonic demodulation chip in the OBO module, the NPO module, the CPO assembly, or the OEIC as a whole may be referred to as an optical/electrical conversion unit, and the optical/electrical conversion unit may also be referred to as an optical engine (optical engine, OE).

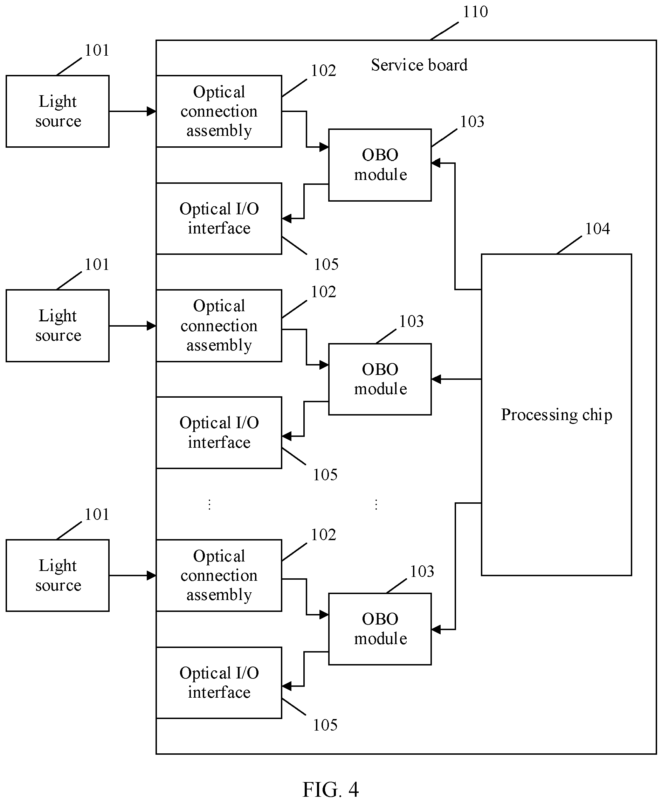

FIG. 4 is a diagram of a structure of the service board 110 shown by using an example in which the silicon photonic chip 103 includes the OBO module. As shown in FIG. 4, in addition to an OBO module 103 and an optical connection assembly 102, the service board 110 further includes a processing chip 104 and an optical I/O interface 105.

The processing chip 104 may be a central processing unit (central processing unit, CPU), a digital signal processor (digital signal processor, DSP), an application-specific integrated circuit (application specific integrated circuit, ASIC), a field-programmable gate array (field-programmable gate array, FPGA) or another programmable logic device, a transistor logic device, a hardware component, or any combination thereof. Alternatively, the processor may be a combination implementing a computing function, for example, a combination including one or more microprocessors, a microcontroller unit (microcontroller unit, MCU), and a digital signal processor, or any combination thereof. Alternatively, the processing chip 104 may be a general-purpose processor or the like.

The optical input/output (input/output, I/O) interface 105 is configured to output an optical signal processed by the OBO module 103, for example, may output an optical signal modulated from an electrical signal.

In addition, it may be learned from FIG. 4 that the service board 110 may include a plurality of OBO modules 103, a plurality of optical connection assemblies 102, and a plurality of optical I/O interfaces 105. Quantities of OBO modules 103, optical connection assemblies 102, and optical I/O interfaces 105 included in the service board 110 are not limited in this embodiment of this application.

In a specific implementation, the optical connection assembly 102 in the service board 110 shown in FIG. 4 is connected to the light source 101. An optical signal generated by the light source 101 is input to the OBO module 103 of the service board 110 after passing through the optical connection assembly 102 of the service board 110. In addition, the processing chip 104 sends an electrical signal to the OBO module 103. Then, the OBO module 103 modulates the electrical signal from the processing chip 104 to the optical signal from the light source 101 by using a silicon photonic modulator, and sends the modulated optical signal through the optical I/O interface 105.

The OBO module in FIG. 4 may be replaced with the foregoing NPO module. For a function of the NPO module, refer to the OBO module. Details are not described herein again in this application.

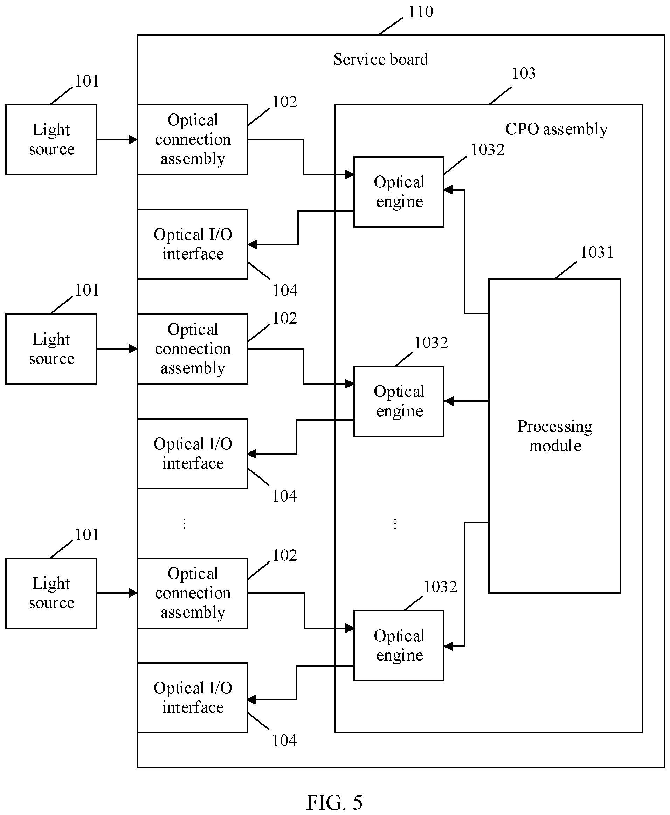

FIG. 5 is a diagram of a structure of the service board 110 shown by using an example in which the silicon photonic chip 103 includes the CPO assembly. As shown in FIG. 5, the service board 110 includes a CPO assembly 103, an optical connection assembly 102, and an optical I/O interface 104.

The CPO assembly 103 includes a processing module 1031 and a plurality of optical engines 1032. The processing module 1031 may be a central processing unit (central processing unit, CPU), a digital signal processor (digital signal processor, DSP), an application-specific integrated circuit (application specific integrated circuit, ASIC), a field-programmable gate array (field-programmable gate array, FPGA) or another programmable logic device, a transistor logic device, a hardware component, or any combination thereof. Alternatively, the processing module 1031 may be a combination implementing a computing function, for example, a combination including one or more microprocessors, a microcontroller unit (microcontroller unit, MCU), and a digital signal processor, or any combination thereof. Alternatively, the processing module 1031 may be a general-purpose processor or the like. For the processing module mentioned in the following, refer to descriptions herein. Details are not described again.

The optical I/O interface 104 is configured to output an optical signal processed by the optical engine 1032, for example, may output an optical signal modulated from an electrical signal.

In addition, it may be learned from FIG. 5 that the service board 110 may include a plurality of optical connection assemblies 102 and a plurality of optical I/O interfaces 104. Quantities of optical connection assemblies 102 and optical I/O interfaces 104 included in the service board 110 are not limited in this embodiment of this application.

In a specific implementation, the optical connection assembly 102 in the service board 110 shown in FIG. 5 is connected to the light source 101. An optical signal generated by the light source 101 is input to the optical engine 1032 in the CPO assembly 103 after passing through the optical connection assembly 102 of the service board 110. In addition, a processing module 1031 in the CPO assembly 103 sends an electrical signal to the optical engine 1032. Then, the optical engine 1032 modulates the electrical signal from the processing module 1031 to the optical signal from the light source 101 by using a silicon photonic modulator, and sends the modulated optical signal through the optical I/O interface 104.

In another possible implementation, the optical communication system 100 includes a backplane component. The backplane component includes a backplane, a service board 1, and a service board 2, and the two service boards may be connected to the backplane in a pluggable manner. Communication between the two service boards may be implemented by exchanging transmission signals between the service boards through the backplane. Specifically, the backplane includes an optical backplane and an electrical backplane. The optical backplane includes an optical connector, and the electrical backplane includes an electrical connector. The optical connector in the optical backplane is configured to connect to an optical interface in the service board, so as to transmit an optical signal. The electrical connector in the electrical backplane is configured to connect to an electrical interface in the service board, so as to transmit an electrical signal.

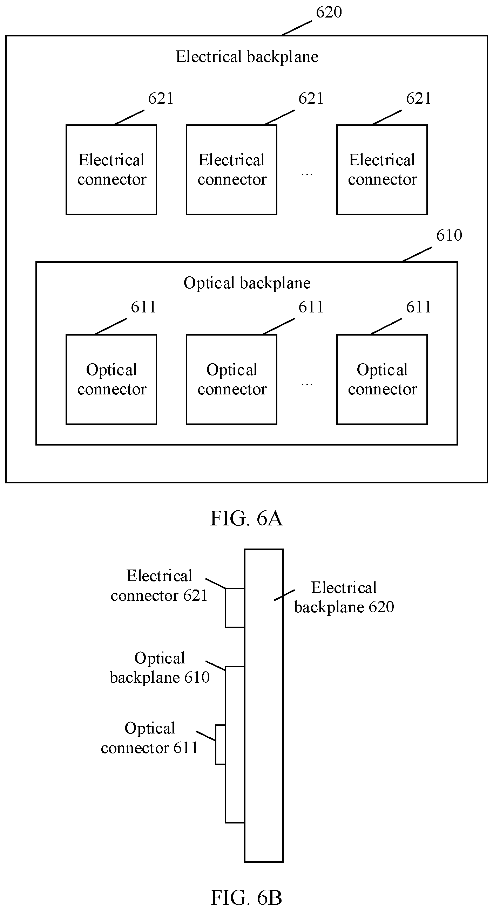

For ease of understanding the backplanes in the foregoing backplane component, refer to FIG. 6A and FIG. 6B as examples. FIG. 6A is an example floor plan of the backplane. FIG. 6B is an example side view of the backplane. It can be learned that an optical backplane 610 is disposed on an electrical backplane 620. The optical backplane 610 includes a plurality of optical connectors 611. The electrical backplane 620 includes a plurality of electrical connectors 621.

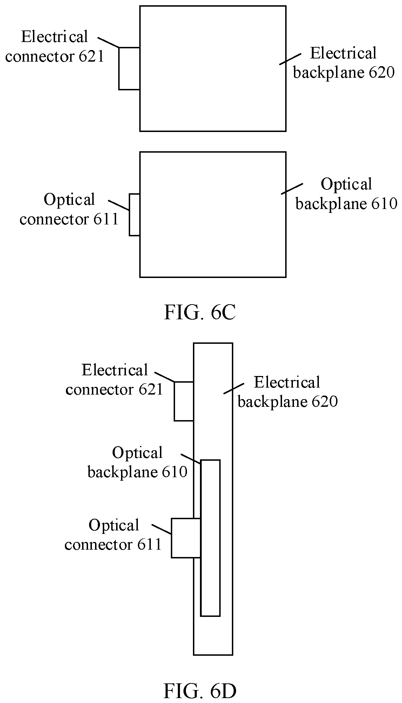

In another possible implementation, the optical backplane 610 and the electrical backplane 620 may also be disposed in parallel or in a manner of optoelectronic integration. For example, refer to FIG. 6C and FIG. 6D. FIG. 6C is a diagram of an example structure in which the optical backplane 610 and the electrical backplane 620 are placed in parallel in the backplane. FIG. 6D is a diagram of an example structure in which the optical backplane 610 and the electrical backplane 620 are disposed in the backplane in a manner of optoelectronic integration.

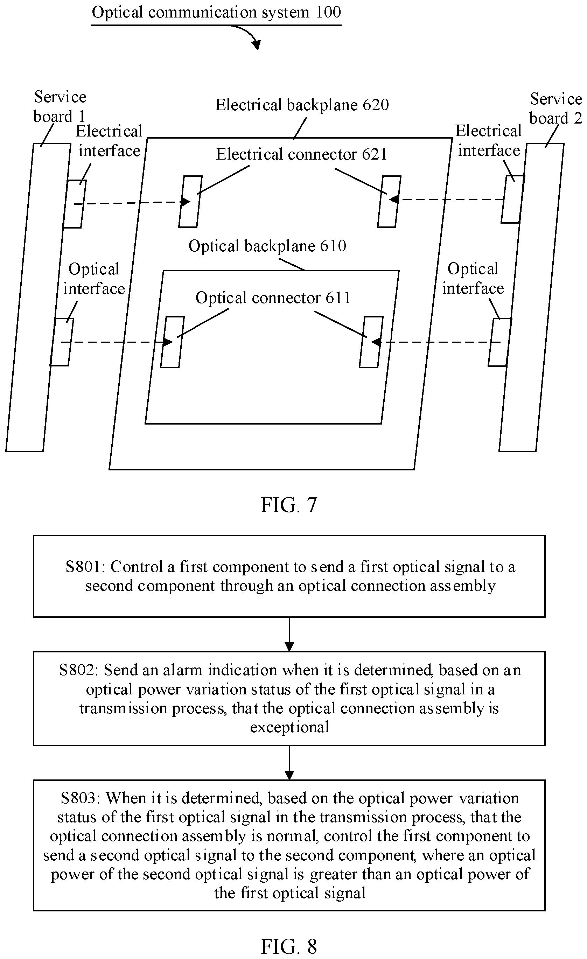

To facilitate understanding of a connection relationship between the service board and the backplane, FIG. 7 shows a diagram of connections between the two service boards and the backplanes by using the service board 1 and the service board 2 in the backplane component as examples. For example, the backplane is shown in a form in which the optical backplane 610 and the electrical backplane 620 shown in FIG. 6B are stacked. It can be learned that the service board 1 and the service board 2 both include an electrical interface and an optical interface. The electrical interface is configured to connect to the electrical connector 621 in the electrical backplane 620, and the optical interface is configured to connect to the optical connector 611 in the optical backplane 610. After being connected to the backplane, the service board 1 and the service board 2 may communicate with each other through the backplane.

In a possible implementation, the structure system shown in FIG. 7 may be the optical communication system 100. Specifically, in FIG. 7, the service board 1 may correspond to the first component 101 in the optical communication system 100, and the service board 2 may correspond to the second component 103 in the optical communication system 100. In addition, the backplane and an optical fiber connector, an optical fiber (optical waveguide), and the like that are in the backplane and that connect the service board 1 and the service board 2 correspond to the optical connection assembly 102 in the optical communication system 100.

In a possible implementation, in addition to being connected to the backplane, the service board 1 or the service board 2 may also connected to another component, for example, may be connected to another component like an external laser source. This is not limited in embodiments of this application.

In a possible implementation, the backplane component may further include other service boards, and these service boards, like the service board 1 and the service board 2, may be connected to the backplane. A quantity of service boards included in the backplane component is not limited in this application.

It should be noted that an optical communication system applicable to this application is not limited to the optical communication system 100 described above. The optical communication system 100 described above is merely an example, and does not constitute limitations on embodiments of this application.

It can be learned from the foregoing descriptions that the first component and the second component are connected by an optical connection assembly. The optical connection assembly may implement optical fiber connection between the first component and the second component. However, pollutants such as dust easily appear in an optical path used to implement optical fiber connection in the optical connection assembly, affecting optical signal transmission. In a high-power optical transmission scenario, the optical path may be burnt because the pollutants cannot bear high optical energy density. Therefore, how to detect, in a timely and low-cost manner, whether an optical path in the optical connection assembly is abnormal is a technical problem that needs to be urgently resolved. To resolve this problem, embodiments of this application provide an optical communication method and a related apparatus. For example, the method may be applied to the optical communication system described above.

In a possible implementation, an execution entity of the optical communication method provided in embodiments of this application may be the first component in the foregoing optical communication system. For example, if the first component is the light source 101, and the light source 101 includes a processing chip, the optical communication method provided in embodiments of this application may be performed by the processing chip. Alternatively, for example, if the first component is the service board 1, and the service board 1 includes a processing chip, the optical communication method provided in embodiments of this application may be performed by the processing chip.

In another possible implementation, an execution entity of the optical communication method provided in embodiments of this application may be the second component in the foregoing optical communication system. For example, if the second component is the silicon photonic chip 103, the optical communication method provided in embodiments of this application may be performed by a processing chip in the silicon photonic chip 103. The silicon photonic chip includes the foregoing OBO module, CPO assembly, NPO module, or the like. Alternatively, for example, if the second component is the service board 2, and the service board 2 includes a processing chip, the optical communication method provided in embodiments of this application may be performed by the processing chip.

In another possible implementation, in addition to the first component, the optical connection assembly, and the second component, the optical communication system further includes another module having a processing capability (a processing module for short). In this case, an execution entity of the optical communication method provided in embodiments of this application may be the processing module. Refer to FIG. 4. For example, the optical communication system 100 further includes a processing chip 104. In this case, an execution entity of the optical communication method provided in embodiments of this application may be the processing chip 104. Refer to FIG. 7. For example, in addition to the service board 1 and the service board 2 shown in FIG. 7, the optical communication system 100 further includes a service board 3 (not shown in FIG. 7). The service board 3 has a processing capability. Like the service board 1 and the service board 2, the service board 3 may be connected to the backplane, and may communicate with the service board 1 and the service board 2 through the backplane. In this case, an execution entity of the optical communication method provided in embodiments of this application may be the service board 3.

In another possible implementation, an execution entity of the optical communication method provided in embodiments of this application may be a combination of a plurality of apparatuses, modules, or chips that have a processing capability in the foregoing optical communication system.

It should be noted that the foregoing execution entity is merely an example. The execution body of the optical communication method provided in embodiments of this application may be any apparatus, module, or chip that has a processing capability in the foregoing optical communication system, or may be a combination of a plurality of any apparatuses, modules, or chips that have a processing capability in the optical communication system. This is not limited in embodiments of this application. In the following descriptions, the execution entity of the optical communication method is referred to as a processing apparatus for short.

Refer to FIG. 8. The optical communication method provided in embodiments of this application includes but is not limited to the following steps.

S801: Control a first component to send a first optical signal to a second component through an optical connection assembly.

It can be learned from the foregoing descriptions that the first component is connected to the second component through the optical connection assembly. Before the first component normally sends the optical signal to the second component, whether an optical path of the optical connection assembly connecting the first component and the second component is normal may be first checked. Specifically, the processing apparatus may test the optical path of the optical connection assembly by controlling the first component to send a test optical signal (that is, the first optical signal) to the second component.

For example, the first component may send the first optical signal to the second component after the first component is inserted into the optical connection assembly and completes initialization of the first component. Alternatively, for example, after receiving an indication for sending a high-power optical signal to the second component, the first component may first send the first optical signal to the second component to test the optical path. Alternatively, for example, the first component may periodically receive an optical path test indication from the processing apparatus, and after receiving the indication, the first component sends the first optical signal to the second component through the optical connection assembly. Alternatively, for example, the first optical signal is sent by another component (for example, an external laser source) to the first component (the first component is, for example, the service board 1 shown in FIG. 7). After receiving the first optical signal, in other words, receiving the optical path test indication, the first component sends the first optical signal to the second component through the optical connection assembly.

For example, the high-power optical signal may be an optical signal whose optical power is greater than 10 dBm. The first optical signal may be a low-power optical signal, for example, an optical signal whose optical power is less than 10 dBm. Therefore, the first optical signal does not cause damage to the optical communication system. It should be noted that the optical power of the high-power optical signal and the low-power optical signal are not limited to the optical powers described herein. In a specific implementation, a value range of the high power and the low power may be adaptively adjusted based on an optical power allowed by the device. This is not limited in this embodiment of this application.

S802: Send an alarm indication when it is determined, based on an optical power variation status of the first optical signal in a transmission process, that the optical connection assembly is abnormal.

The first component sends the first optical signal to the second component through the optical connection assembly, and an insertion loss is generated when the optical signal passes through the optical connection assembly. In addition, if the optical path of the optical connection assembly is contaminated by pollutants such as dust, the insertion loss increases. In a possible implementation, whether the optical path of the optical connection assembly is contaminated may be determined by calculating an insertion loss variation value of the optical connection assembly. The insertion loss variation value may indicate the optical power variation status of the first optical signal in the transmission process. Embodiments of this application provide a plurality of manners of calculating the insertion loss variation value of the optical connection assembly. The following describes different cases, and details are not described herein.

After obtaining the insertion loss variation value of the optical connection assembly through calculation based on the first optical signal, the processing apparatus may determine whether the optical path of the optical connection assembly is normal by determining whether the insertion loss variation value is within a preset range. The preset range may be a range less than a threshold. For example, the threshold may be any value between -10 and 10. In a specific implementation, a value of the threshold may be determined based on an actual situation. The value of the threshold is not limited in this embodiment of this application.

If the insertion loss variation value exceeds the preset range, it indicates that the optical path of the optical connection assembly is abnormal. The processing apparatus sends an alarm indication based on the determining result. For example, an alarm indication may be sent to an indicator, so that the indicator raises an alarm (for example, a red light is on). Alternatively, for example, an alarm indication may be sent to a buzzer, so that the buzzer raises an alarm through buzzing. Alternatively, for example, if the optical communication system includes a liquid crystal display, the liquid crystal display may be indicated to display the alarm information. A specific alarm manner is not limited in this application.

S803: When it is determined, based on the optical power variation status of the first optical signal in the transmission process, that the optical connection assembly is normal, control the first component to send a second optical signal to the second component, where an optical power of the second optical signal is greater than an optical power of the first optical signal.

If the insertion loss variation value of the optical connection assembly is within the preset range, the processing apparatus determines that the optical path of the optical connection assembly is normal and not contaminated. In this case, the processing apparatus may control the first component to normally send the optical signal (that is, the second optical signal) to the second component. The second optical signal may be a high-power optical signal, and the optical power of the second optical signal may be greater than that of the first optical signal.

In another possible implementation, if the insertion loss is increased due to contamination caused by pollutants such as dust in the optical path of the optical connection assembly, the optical power of the first optical signal received by the second component is reduced. In this case, whether the optical path of the optical connection assembly is contaminated may be determined based on a variation status obtained through comparing the optical power of the first optical signal received by the second component with a preset received optical power, so as to determine whether the optical connection assembly is abnormal. The optical power variation status may indicate a variation status of the optical power of the first optical signal in the transmission process. For example, a difference between the optical power of the first optical signal received by the second component and the preset received optical power may be calculated, and then whether the difference is within a preset range is determined.

If the difference exceeds the preset range, it indicates that the optical path is abnormal. In this case, the processing apparatus sends an alarm indication based on the determining result.

If the difference is within the preset range, it indicates that no exception occurs in the optical path. In this case, the processing apparatus may control the first component to normally send the optical signal (that is, the second optical signal) to the second component.

For example, the preset received optical power and the preset range may be pre-stored in a memory of the foregoing optical system.

In embodiments of this application, an optical path status of the optical connection assembly may be detected by using a low-power optical signal. If the optical path is abnormal, an alarm is generated. If the optical path is normal, transmission of a high-power optical signal starts. This avoids a problem that the optical path of the optical connection assembly is burnt because a high-power signal is directly transmitted while an exception of the optical path of the optical connection assembly is not perceived.

In addition, in embodiments of this application, an insertion loss variation value of the optical connection assembly is measured based on a power of a transmitted optical signal, and whether the optical path of the optical connection assembly is abnormal is determined based on the insertion loss variation value. Compared with an existing solution in which an instrument is used to detect whether an optical path of an optical connection assembly is abnormal, this solution is labor-saving and has lower costs, and this solution has higher detection accuracy, so that an exception can be detected in a timely manner.

The following describes implementations of calculating the insertion loss variation value of the optical connection assembly in different cases. In embodiments of this application, an example in which an optical power unit is decibel-milliwatt (dBm) and an insertion loss unit is decibel (dB) is used for description.

In a possible implementation, the insertion loss variation value of the optical connection assembly may be calculated based on the first optical power and the second optical power. The first optical power is an optical power of the transmitted first optical signal at a first interface that connects the first component and the optical connection assembly, and the second optical power is an optical power of the transmitted first optical signal at a second interface that connects the second component and the optical connection assembly. The following describes several specific implementations by using examples.

In a possible implementation, the first component and the second component include monitor detectors. A monitor detector included in the first component may be referred to as a first monitor detector, and a monitor detector included in the second component may be referred to as a second monitor detector.

For example, the first monitor detector and the second monitor detector may be monitor photodiodes (monitor photodiodes, MPDs).

In a specific implementation, there is one optical signal (referred to as a target optical signal for short). The target optical signal may be an optical signal generated by a light source in the first component, or may be an optical signal input to the first component by another component (for example, an external laser source connected to the first component). In the first component, the target optical signal may be split into two optical signals based on powers. For example, the target optical signal may be split into two optical signals by using a coupler, an optical splitter, or the like.

An optical signal with a higher optical power in the two optical signals is the first optical signal, and is output from the first component to the optical connection assembly and transmitted to the second component through the optical connection assembly. An optical signal with a lower optical power in the two optical signals (referred to as a third optical signal for short) is input into the first monitor detector of the first component. The first monitor detector performs detection on the third optical signal to obtain an optical power of the third optical signal, and the optical power obtained through detection may be referred to as a third optical power for short.

In addition, the first optical signal is input to the second component through the optical connection assembly. After receiving the first optical signal, the second component may split the received first optical signal into two optical signals based on powers. For example, the received first optical signal may be split into the two optical signals by using a coupler, an optical splitter, or the like. An optical signal with a lower optical power in the two optical signals (referred to as a fourth optical signal for short) is input to the second monitor detector of the second component. The second monitor detector performs detection on the fourth optical signal to obtain an optical power of the fourth optical signal, and the optical power obtained through detection may be referred to as a fourth optical power for short.

In addition, an optical signal that has a higher optical power and that is obtained by splitting the received first optical signal may be used for other processing. For example, the optical signal may be input to a silicon photonic modulator for optical modulation. Usage of the optical signal with the higher optical power is not limited in this application.

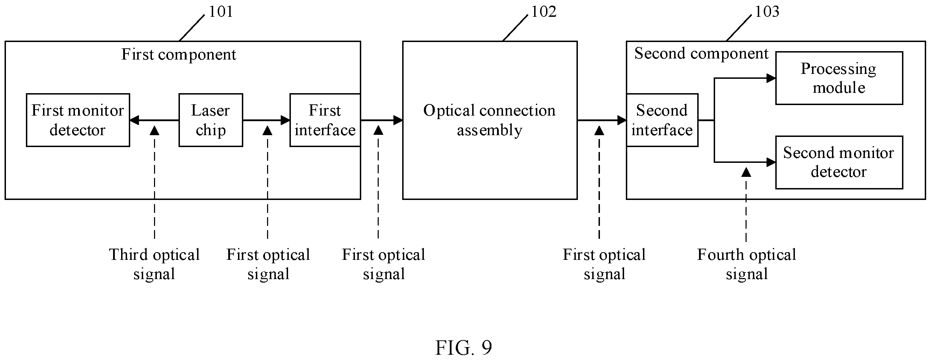

For ease of understanding, refer to FIG. 9. In FIG. 9, an example in which the target optical signal is the optical signal generated by the light source in the first component is used. As shown in FIG. 9, a first component 101 includes a light source chip, a first monitor detector, and a first interface. The target optical signal may be generated by the light source chip. After generating the target optical signal, the light source chip may split the target optical signal into two signals (the first optical signal and the third optical signal). The third optical signal is input to the first monitor detector, and the first optical signal is sent to the first interface. The first interface is connected to an optical connection assembly 102. In this case, the first optical signal may be input to the optical connection assembly 102 through the first interface and transmitted to a second component 103 through the optical connection assembly 102.

For example, the first monitor detector may be integrated into the light source chip. Alternatively, the first monitor detector and the light source chip are co-packaged in the first component.

In another possible implementation, the first component 101 does not include the light source chip, and the first optical signal may be input to the first component from another component (for example, an external laser source connected to the first component). Similarly, after receiving the first optical signal, the first component splits the first optical signal into two signals. One signal is input to the first monitor detector. The other signal is sent to the first interface, transmitted to the second interface through the optical connection assembly 102, and input to the second component.

In addition, as shown in FIG. 9, the second component 103 includes the second interface, a second monitor detector, and a processing module. The first optical signal transmitted from the first component 101 through the optical connection assembly 102 is input to the second component through the second interface. After receiving the first optical signal through the second interface, the second component splits the received first optical signal into two signals. One optical signal (the fourth optical signal) is input to the second monitor detector, and the other optical signal is sent to the processing module for processing. For example, the processing module may be a silicon photonic modulator, another processing chip, or the like. This is not limited in this embodiment of this application.

For example, after being input through the second interface, the first optical signal is first input to an optical coupler, and the optical coupler splits the first optical signal into two optical signals. One signal is input to the second monitor detector, and the other signal is input to the processing module. The second monitor detector may be disposed closer to the optical coupler, so that an optical power of an optical signal obtained through detection is more accurate.

After detection is performed on the third optical signal to obtain the third optical powerobtained by performing detection on, the first monitor detector may calculate, based on the third optical power, an optical power of the transmitted first optical signal at the first interface that connects the first component and the optical connection assembly, that is, calculate the first optical power.

For example, obtaining the third optical signal and the first optical signal through splitting the target optical signal based on the powers may be obtaining the third optical signal and the first optical signal through splitting the target optical signal based on a preset optical power proportion. The preset optical power proportion may be determined based on a component that splits the target optical signal. The preset optical power proportion may be represented by q. It is assumed that the optical power of the first optical signal obtained through splitting is represented by p1, and the optical power of the third optical signal obtained through splitting, that is, the third optical power, is represented by p2. In addition, it is assumed that units of the optical powers p1 and p2 are milliwatt (mw). In this case, a relationship between p1 and p2 is p1/p2=q.

If the units of the optical powers p1 and p2 are converted into dBm, the equation p1/p2=q may be transformed into 10log₁₀(pl/p2)=10log₁₀(q). Further, because q is known, 10log₁₀(q) is a constant, and Q may represent the constant. In this case, 10log₁₀(p1/p2)=10log₁₀(q) may be transformed into 10log₁₀(p1)-10log₁₀(p2)=Q. 10log₁₀(p1) is an optical power value of the first optical signal obtained through splitting with the optical power unit being dBm, and may be represented by P1, that is, P1=10log₁₀(p1). Similarly, 10log₁₀(p2) is an optical power value of the third optical signal obtained through splitting with the optical power unit being dBm, and may be represented by P2, that is, P2=10log₁₀(p2). Therefore, it can be obtained that P1-P2=Q.

In the foregoing equation P1-P2=Q, P2 is the optical power of the third optical signal output by the component used to split the target optical signal. After being output from the optical splitting component, the third optical signal further needs to be transmitted to the first optical monitor detector. A specific power loss exists in the transmission process, and the loss may be represented by Q1. In this case, the third optical power obtained by performing detection on the third optical signal by the first monitor detector is P2-Q1. That is, P2=the third optical power+Q1.

In addition, the first optical power is an optical power of the transmitted first optical signal at the first interface. A specific power loss exists in a process of transmitting the first optical signal obtained through splitting to the first interface, and the loss may be represented by Q2. Therefore, to obtain the first optical power, the power loss Q2 needs to be subtracted from the calculated optical power of the first optical signal obtained through splitting. That is, the first optical power=P1-Q2, and P1=the first optical power+Q2.

Based on the foregoing descriptions, P1-P2=Q may be transformed into (the first optical power+Q2)-(the third optical power+Q1)=Q, and then it can be obtained that the first optical power=the third optical power+(Q+Q1-Q2). Values of the losses Q1 and Q2 are usually within a specific range, and the values of Q1 and Q2 may be determined through test. In this case, if values of Q, Q1, and Q2 are known, Q+Q1-Q2 is also a constant, and α is used to represent the constant, that is, α=Q+Q1-Q2. In this case, the first optical power=the third optical power+α, where α may be stored in a register for subsequent calculation.

In another possible implementation, α may be considered as a parameter in the first component, and the parameter represents an inherent relationship between a first target optical power and a second target optical power in the first component. The first target optical power (for example, the third optical power) is an optical power of a first target optical signal (for example, the third optical signal) obtained through detection by the first monitor detector. The second target optical power (for example, the first optical power) is an optical power of a transmitted second target optical signal (for example, the first optical signal) at the first interface. The first target optical signal and the second target optical signal are two optical signals obtained by splitting one optical signal (for example, the target optical signal described in FIG. 9) in the first component based on the powers. In this case, α may also be obtained through test, and then α is stored in the register for subsequent calculation.

For example, α may be stored in a register of the first component, or may be stored in a register corresponding to the processing apparatus for performing the optical communication method provided in embodiments of this application. In a specific implementation, the processing apparatus may obtain α from the register that stores α.

Based on the foregoing descriptions, in a specific implementation, because α is known, and the third optical power may be obtained through detection by the first detector, the first optical power may be quickly calculated.

After detection is performed on the fourth optical signal to obtain the fourth optical powerobtained by performing detection on, the second monitor detector may calculate, based on the fourth optical power, an optical power of the transmitted first optical signal at the second interface that connects the second component and the optical connection assembly, that is, calculate an second optical power.

For example, obtaining the fourth optical signal through splitting the received first optical signal by the second component based on the powers may be obtaining the fourth optical signal through splitting the first optical signal based on a preset optical power proportion. Similarly, the preset optical power proportion may be determined based on a component that splits the first optical signal. The preset optical power proportion may be represented by k. It is assumed that the optical power of the first optical signal received by the second component at the second interface, namely, the second optical power, is represented by p3, and the optical power of the fourth optical signal obtained through splitting is represented by p4. In addition, it is assumed that units of the optical powers p3 and p4 are milliwatt (mw). In this case, a relationship between p3 and p4 is p4/p3=k.

If the units of the optical powers p3 and p4 are converted into dBm, the equation p3/p4=k may be converted into 10log₁₀(p3/p4)=10log₁₀(k). Further, because k is known, 10log₁₀(k) is a constant, and K may be used to represent the constant. In this case, 10log₁₀(p3/p4)=10log₁₀(k) may be transformed into 10log₁₀(p3)-10log₁₀(p4)=K. 10log₁₀(p3) is the second optical power value whose optical power unit is dBm, and may be represented by P3, that is, P3=10log₁₀(p3). Similarly, 10log₁₀(p4) is an optical power value of the fourth optical signal obtained through splitting with the optical power unit being dBm, and may be represented by P4, that is, P4=10log₁₀(p4). Therefore, it can be obtained that P3-P4=K, and P3=P4+K.

In the foregoing equation P3=P4+K, P4 is the optical power of the fourth optical signal output by the component used to split the received first optical signal. After being output from the optical splitting component, the fourth optical signal further needs to be transmitted to the second optical monitor detector. A specific power loss exists in the transmission process, and the loss may be represented by K'. That is, P4 is equal to a sum of the loss K' and the fourth optical power obtained by performing detection on the fourth optical signal by the second monitor detector. It is assumed that the fourth optical power obtained through detection is represented by P5. Then, P3=P4+K=P5+K'+K.

A value of the loss K' is usually within a specific range, and the value of K' may be determined through test. In this case, if values of K and K' are known, K+K' is also a constant, and β is used to represent the constant, that is, β=K+K'. In this case, the second optical power P3=P5+β, that is, the second optical power=the fourth optical power+β, where β may be stored in the register for subsequent calculation.

In another possible implementation, β may be considered as a parameter in the second component, and the parameter represents a value of an inherent relationship between a third target optical power and a fourth target optical power in the second component. The third target optical power (for example, the second optical power) is an optical power of the third target optical signal (for example, the first optical signal received by the second component) at the second interface in the second component. The fourth target optical power (for example, the fourth optical power) is an optical power of a fourth target optical signal (for example, the fourth optical signal) obtained through detection by the second monitor detector, where the fourth target optical signal is an optical signal obtained by splitting the third target optical signal based on powers. In this case, β may also be obtained through test, and then β is stored in the register for subsequent calculation.

For example, β may be stored in a register of the second component, or may be stored in the register corresponding to the processing apparatus for performing the optical communication method provided in embodiments of this application. In a specific implementation, the processing apparatus may obtain β from the register that stores β.

Based on the foregoing descriptions, in a specific implementation, because β is known, and the fourth optical power may be obtained through detection by the second detector, the second optical power may be quickly calculated.

Based on the foregoing descriptions, the first optical power and the second optical power can be obtained. In this case, an insertion loss value of the first optical signal passing through the optical connection assembly may be calculated based on the first optical power and the second optical power. For example, the insertion loss value=the first optical power-the second optical power. It can be learned that the insertion loss value of the optical connection assembly includes an insertion loss of coupling between the first interface and the optical connection assembly, an insertion loss generated by the optical connection assembly, and an insertion loss of coupling between the second interface and the optical connection assembly.

After the insertion loss value is obtained, a difference between the insertion loss value and a preset insertion loss value of the optical connection assembly may be calculated. The difference or an absolute value of the difference is the insertion loss variation value of the optical connection assembly. After the insertion loss variation value is obtained, it can be determined, based on the insertion loss variation value, whether the optical path of the optical connection assembly is abnormal. For a specific determining manner, refer to corresponding descriptions in steps S802 and S803. Details are not described herein again.

In a specific implementation, the preset insertion loss value of the optical connection assembly is pre-stored in a register of a component like the processing apparatus, and the processing apparatus may read the preset insertion loss value from the register. For example, the preset insertion loss value may be obtained through test and stored in the register. Alternatively, the preset insertion loss value may be set and stored in the register before delivery. In a possible implementation, the preset insertion loss value fluctuates within a proper range. For example, the fluctuation range may be ±0.5 dB, ±0.8 dB, ±0.3 dB, or the like. This is not limited in embodiments of this application. The fluctuation range may also be stored in the register.

In a possible implementation, the first optical power may be calculated based on a transmit optical power of the light source chip for generating the target optical signal. In a specific implementation, the transmit optical power of the light source chip may be obtained through monitoring by using a microcontroller unit (microcontroller unit, MCU) or may be a fixed transmit power, and the transmit optical power is stored in the register of the first component in advance. The transmit optical power is an output optical power of the light source chip for generating the target optical signal, and may be considered as an optical power of the generated target optical signal. In this case, there is also a specific relationship between the transmit optical power and the optical power of the transmitted first optical signal at the first interface, namely, the first optical power. Specifically, if the transmit optical power=Q3+the first optical power, the first optical power=the transmit optical power-Q3. Similarly, in the first component, Q3 may fluctuate within a specific range. Therefore, Q3 may be obtained through test, and a value of Q3 obtained through test and the fluctuation range of Q3 may be stored in the register of the first component or the processing apparatus for subsequent use.

Similarly, the first optical power is calculated based on the transmit optical power, and the second optical power is calculated by using the foregoing method, so that the insertion loss variation value of the optical connection assembly is calculated. After the insertion loss variation value is obtained, it can be determined, based on the insertion loss variation value, whether the optical path of the optical connection assembly is abnormal. For a specific determining manner, refer to corresponding descriptions in steps S802 and S803. Details are not described herein again.

In another possible implementation in which the insertion loss variation value of the optical connection assembly may be calculated based on the first optical power and the second optical power, the first component does not include the monitor detector, and the second component still includes the second monitor detector. In this case, in this implementation, for a specific implementation of obtaining the second optical power, still refer to the foregoing descriptions. Details are not described herein again. The following describes a specific implementation of obtaining the first optical power in a case in which the first component does not include the monitor detector.

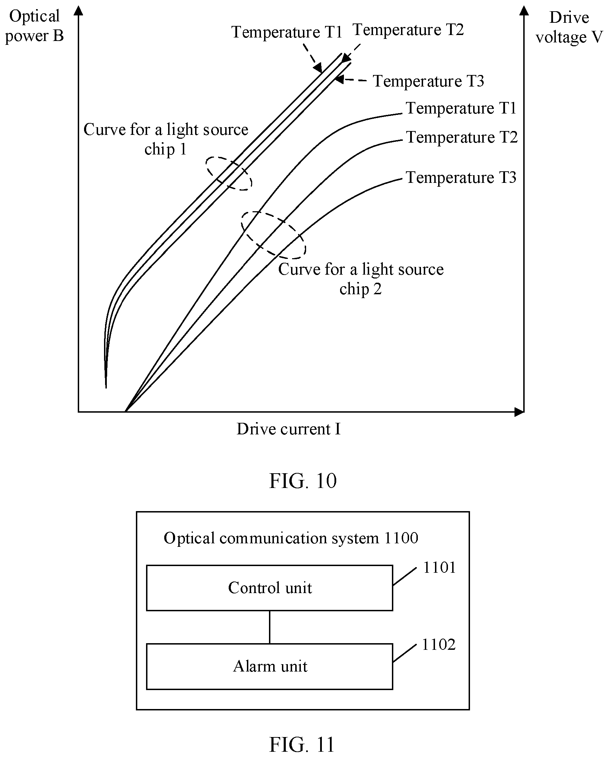

In this embodiment of this application, the first component includes the light source chip. In this case, in a specific implementation, the first optical signal is generated by the light source chip. An optical power of a transmitted optical signal generated by the light source chip at the first interface that connects the first component and the optical connection assembly is related to parameters such as a temperature T, a drive voltage V, and a drive current I of the light source chip. It is assumed that the optical power the transmitted optical signal generated by the light source chip at first interface that connects the first component and the optical connection assembly is represented by B. For example, refer to FIG. 10.

In FIG. 10, T1>T2>T3. It can be learned that the optical power B increases as the drive current I increases, increases as the drive voltage V increases, and increases as the temperature T increases. In addition, different light source chips correspond to different relationship curves.

Based on the foregoing I-V-T-B relationship, an I-V-T-B relationship parameter table may be obtained in advance through test, or the relationship parameter table may be provided by a vendor. The parameter table may be stored in the register of the first component, or may be stored in the register of the foregoing processing apparatus, or the like. For example, refer to an I-V-T-B relationship parameter table shown in Table 1.

**Table 1**

| I | V | T | B |
|---|---|---|---|
| I1 | V1 | T1 | B1 |
| I2 | V2 | T2 | B2 |
| I3 | V3 | T3 | B3 |
| ... | ... | ... | ... |

In this case, in a specific implementation, the processing apparatus may monitor the temperature T, the drive voltage V, and the drive current I of the light source chip in real time. Then, a corresponding optical power B is found in the I-V-T-B relationship parameter table based on a monitored temperature T, drive voltage V, and drive current I. In this case, the optical power B is an optical power at the first interface of a transmitted optical signal currently generated by the light source chip.

For example, a thermistor may be used to monitor the temperature of the light source chip. An analog-to-digital converter ADC or a microcontroller unit (microcontroller unit, MCU) may be used to monitor the drive current and drive voltage of the light source chip.

Based on the foregoing descriptions, when generating the foregoing first optical signal, the light source chip may monitor a current temperature, drive current, and drive voltage of the light source chip in real time, and then a corresponding optical power is found in the foregoing relationship parameter table. The found optical power is the first optical power.

In another possible implementation, if the drive current and the drive voltage of the light source chip remain unchanged, the optical power B is related to the temperature T of the light source chip. A T-B relationship parameter table may be obtained based on the correlation. For example, refer to Table. 2.

**Table 2**

| T | B |
|---|---|
| T1 | B1 |
| T2 | B2 |
| T3 | B3 |
| ... | ... |

In this case, when generating the foregoing first optical signal, the light source chip may monitor a current temperature of the light source chip in real time, and then an optical power corresponding to the temperature is found in the foregoing relationship parameter table. The found optical power is the first optical power.

In a possible implementation, when the monitored current temperature of the light source chip cannot be found in the T-B relationship parameter table, the optical power corresponding to the monitored temperature may be calculated by using an interpolation method. For example, in a possible implementation, an interpolation function may be obtained through fitting based on data in the foregoing T-B relationship parameter table. In the interpolation function, the temperature T is a parameter, and the optical power B is a function value. In this case, the corresponding optical power may be calculated by putting the temperature obtained through detection into the interpolation function. Similarly, for the foregoing I-V-T-B relationship parameter table, if at least one of the monitored temperature, drive current, and drive voltage cannot be found in the I-V-T-B relationship parameter table, an interpolation function may be obtained through fitting based on data in the I-V-T-B relationship parameter table. Parameters of the interpolation function are the temperature T, the drive voltage V, and the drive current I. The optical power B is a function value of the function. In this case, the corresponding optical power may be calculated by putting the temperature, drive current, and drive voltage that are obtained through detection into the interpolation function.

After the first optical power and the second optical power are obtained based on the foregoing descriptions, the insertion loss variation value of the optical connection assembly can be calculated. After the insertion loss variation value is obtained, it can be determined, based on the insertion loss variation value, whether the optical path of the optical connection assembly is abnormal. For a specific determining manner, refer to corresponding descriptions in steps S802 and S803. Details are not described herein again.

In a possible implementation, the insertion loss variation value of the optical connection assembly may alternatively be calculated without calculating the first optical power and the second optical power. In this implementation, the first component includes the first monitor detector, and the second component includes the second monitor detector. It can be learned from the foregoing descriptions that the first optical power=the third optical power+α, and the second optical power=the fourth optical power+β. In this case, the current insertion loss value of the optical connection assembly=the first optical power-the second optical power=(the third optical power+α)-(the fourth optical power+β).

For example, the insertion loss variation value of the optical connection assembly=the current insertion loss value of the optical connection assembly-the preset insertion loss value. Based on the foregoing calculation equation for the current insertion loss value of the optical connection assembly, the preset insertion loss value may also be calculated according to the calculation equation. That is, the preset insertion loss value=(a first preset optical power+α)-(a second preset optical power+β). The first preset optical power is an optical power obtained in advance through detection by the first monitor detector based on a test optical signal in the first component. The second preset optical power is an optical power obtained in advance through detection by the second monitor detector based on the test optical signal transmitted to the second component.

Specifically, the first component may send the test optical signal to the second component through the optical connection assembly. Similarly, the test optical signal is split into two optical signals in the first component. One optical signal is input to the first monitor detector, and the other optical signal is output from the first interface and input to the second component through the optical connection assembly. The optical power obtained by performing detection on the input signal by the first monitor detector is the first preset optical power. The first preset optical power may be stored in the register of the first component, or may be stored in the register of the processing apparatus, or the like. The processing apparatus may read the first preset optical power from the register.

Then, the optical signal input to the second component is also equally split into two optical signals. One optical signal is input to the second monitor detector of the second component, and the other optical signal is input to the processing module of the second component. The optical power obtained by performing detection on the input signal by the second monitor detector is the second preset optical power. The second preset optical power may be stored in the register of the second component, or may be stored in the register of the processing apparatus, or the like. The processing apparatus may read the second preset optical power from the register.

Therefore, because the insertion loss variation value of the optical connection assembly=the current insertion loss value of the optical connection assembly-the preset insertion loss value, it can be obtained that the insertion loss variation value of the optical connection assembly=[(the third optical power+α)-(the fourth optical power+β)]-[(the first preset optical power+α)-(the second preset optical power+β)]=the third optical power-the fourth optical power-the first preset optical power+the second preset optical power. The first preset optical power and the second preset optical power may be read from the register, the third optical power is the optical power obtained by the first monitor detector through detection, and the fourth optical power is optical power obtained by the second monitor detector through detection. Therefore, the insertion loss variation value of the optical connection assembly may be calculated based on the optical power obtained through detection by the first monitor detector, the optical power obtained through detection by the second monitor detector, the first preset optical power, and the second preset optical power. The first optical power and the second optical power do not need to be calculated. This implementation is easy, and can improve efficiency of optical path exception detection in the optical connection assembly.

Usually, in an existing implementation, because the third optical signal is the optical signal obtained by splitting the target optical signal based on the powers, the optical power of the third optical signal obtained through detection by the first monitor detector is used to analyze whether the optical power of the target optical signal is within a normal range. Similarly, usually, in an existing implementation, because the fourth optical signal is an optical signal obtained by splitting, based on the powers, the first optical signal received from the second component, the optical power of the fourth optical signal obtained through detection by the second monitor detector is used to analyze whether the optical power of the received first optical signal is within a normal range. However, in embodiments of this application, the insertion loss variation value of the optical connection assembly may be calculated based on the optical powers obtained through detection by the first monitor detector and the second monitor detector. In other words, in embodiments of this application, no additional optical power detection apparatus needs to be added, and the insertion loss variation value of the optical connection assembly can be calculated based on existing obtainable data in the optical communication system. In this way, hardware costs are reduced, and the existing obtainable data can be repeatedly used.

The foregoing describes the optical communication method provided in embodiments of this application. It may be understood that, to implement the foregoing corresponding functions, each device or apparatus includes a corresponding hardware structure and/or a corresponding software module for performing the functions. In combination with example units and steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional modules based on the foregoing method examples. For example, each functional module corresponding to each function may be obtained through division, or two or more functions may be integrated into one module. The integrated module may be implemented in a form of hardware, or may be implemented in a form of a software functional module. It should be noted that, in embodiments of this application, module division is an example, and is merely logic functional division. In an actual implementation, another division manner may be used.

When functional module division is performed based on corresponding functions, FIG. 11 is a diagram of a specific logic structure of an optical communication system 1100. The optical communication system 1100 includes:
a control unit 1101, configured to control a first component to send a first optical signal to a second component through an optical connection assembly, where the first component and the second component are connected by the optical connection assembly, and the first component, the second component, and the optical connection assembly are components in the optical communication system 1100; and
an alarm unit 1102, configured to send an alarm indication when it is determined, based on an optical power variation status of the first optical signal in a transmission process, thatthe optical connection assembly is abnormal, where
the control unit 1101 is further configured to: when it is determined, based on the optical power variation status of the first optical signal in the transmission process, that the optical connection assembly is normal, control the first component to send a second optical signal to the second component, where an optical power of the second optical signal is greater than an optical power of the first optical signal.

In a possible implementation, the optical communication system 1100 further includes a first obtaining unit configured to obtain the optical power variation status of the first optical signal in the transmission process, and the first obtaining unit is specifically configured to:
obtain a first optical power and a second optical power, where the first optical power is an optical power of the transmitted first optical signal at a first interface that connects the first component and the optical connection assembly, and the second optical power is an optical power of the transmitted first optical signal at a second interface that connects the second component and the optical connection assembly; and
calculate the variation status based on the first optical power and the second optical power.

In a possible implementation, the first component includes a first monitor detector; and
the first obtaining unit is specifically configured to:
calculate the first optical power based on a third optical power and a first fixed value, where
the third optical power is an optical power of a third optical signal obtained through detection by the first monitor detector, the third optical signal and the first optical signal are two optical signals obtained through splitting an optical signal in the first component based on powers, and the first fixed value is pre-stored in a register of the optical communication system 1100.

In a possible implementation, the first fixed value is a value of an inherent relationship between a first target optical power and a second target optical power in the first component, the first target optical power is an optical power of a first target optical signal obtained through detection by the first monitor detector, the second target optical power is an optical power of a transmitted second target optical signal at the first interface, and the first target optical signal and the second target optical signal are two optical signals obtained by splitting the optical signal in the first component based on powers.

In a possible implementation, the first component includes a light source, the light source includes a light source chip, the first optical signal is generated by the light source chip in the light source, and an optical power at the first interface of a transmitted optical signal generated by the light source chip is related to a temperature of the light source chip; and
the first obtaining unit is specifically configured to:
obtain a current temperature of the light source chip; and
determine the first optical power based on the detected temperature.

In a possible implementation, the optical power at the first interface of the transmitted optical signal generated by the light source chip is further related to a drive current and a drive voltage of the light source chip;
the first obtaining unit is specifically configured to:
obtain a current drive current and a current drive voltage of the light source chip; and
the determining the first optical power based on the detected temperature includes:
   determining the first optical power based on the detected temperature, drive current, and drive voltage.

In a possible implementation, the second component includes a second monitor detector, and the first obtaining unit is specifically configured to:
calculate the second optical power based on a fourth optical power and a second fixed value, where
the fourth optical power is an optical power of a fourth optical signal obtained through detection by the second monitor detector, where the fourth optical signal is an optical signal obtained by splitting the first optical signal transmitted to the second component based on powers;; and the second fixed value is pre-stored in the register of the optical communication system 1100.

In a possible implementation, the second fixed value is a value of an inherent relationship between a third target optical power and a fourth target optical power in the second component, the third target optical power is an optical power of a third target optical signal at the second interface in the second component, the fourth target optical power is an optical power of a fourth target optical signal obtained through detection by the second monitor detector, and the fourth target optical signal is an optical signal obtained by splitting the third target optical signal based on powers.

In a possible implementation, the first obtaining unit is specifically configured to:
calculate a first insertion loss value of the optical connection assembly based on the first optical power and the second optical power; and
calculate an insertion loss variation value of the optical connection assembly based on the first insertion loss value and thea preset insertion loss value of the optical connection assembly, where the preset insertion loss value is read from the register of the optical communication system 1100, and the insertion loss variation value indicates the variation status.

In a possible implementation, the optical communication system 1100 further includes a second obtaining unit configured to obtain the optical power variation status of the first optical signal in the transmission process, and the second obtaining unit is specifically configured to:
calculate the insertion loss variation value of the optical connection assembly based on a fifth optical power, a sixth optical power, a first preset optical power, and a second preset optical power, where the insertion loss variation value indicates the variation status, where
the fifth optical power is an optical power of a fifth optical signal, where the fifth optical signal and the first optical signal are two optical signals obtained through splitting an optical signal in the first component based on powers;
the sixth optical power is an optical power of a sixth optical signal, where the sixth optical signal is an optical signal obtained by splitting, based on powers, the first optical signal transmitted to the second component; and
the first preset optical power and the second preset optical power are read from a register of the optical communication system 1100.

In a possible implementation, the first component includes a first monitor detector;
the fifth optical power is an optical power obtained by performing detection on the fifth optical signal by the first monitor detector; and
the first preset optical power is an optical power obtained in advance through detection by the first monitor detector based on a test optical signal in the first component.

In a possible implementation, the second component includes a second monitor detector;
the sixth optical power is an optical power obtained by performing detection on the sixth optical signal by the second monitor detector; and
the second preset optical power is an optical power obtained in advance through detection by the second monitor detector based on the test optical signal transmitted to the second component.

In a possible implementation, the optical connection assembly includes one or more of an optical fiber, an optical connector, an optical fiber board, an optical-electrical integrated connector, an optical waveguide, or the like.

For example, the control unit 1101, the alarm unit 1102, the first obtaining unit, or the second obtaining unit may be implemented in a form of software, that is, these units are represented as corresponding program modules, and these program modules may be stored in a memory of an execution entity. The processor in the execution entity may invoke these program modules in the memory to implement the functions described above.

Alternatively, for example, the control unit 1101, the alarm unit 1102, the first obtaining unit, or the second obtaining unit may be implemented in a form of hardware. In this case, the processor in the execution entity may send control instructions to these hardware units, so that these units implement the functions described above.

Alternatively, for example, the control unit 1101, the alarm unit 1102, the first obtaining unit, or the second obtaining unit may be implemented in a form of a combination of software and hardware. In this case, a program module implemented by software may be stored in a memory of the execution entity. A processor in the execution entity may invoke the program module in the memory, and simultaneously send a control instruction to a corresponding hardware module, so that these units implement the functions described above.

For example, for a specific form of the processor in the execution entity, refer to related descriptions of the processing chip 104 shown in FIG. 4 or the processing module 1031 shown in FIG. 5. Details are not described herein again.

For specific operations and beneficial effect of the units in the optical communication system 1100 shown in FIG. 11, refer to the corresponding descriptions in FIG. 8 and the possible method embodiment of FIG. 8. Details are not described herein again.

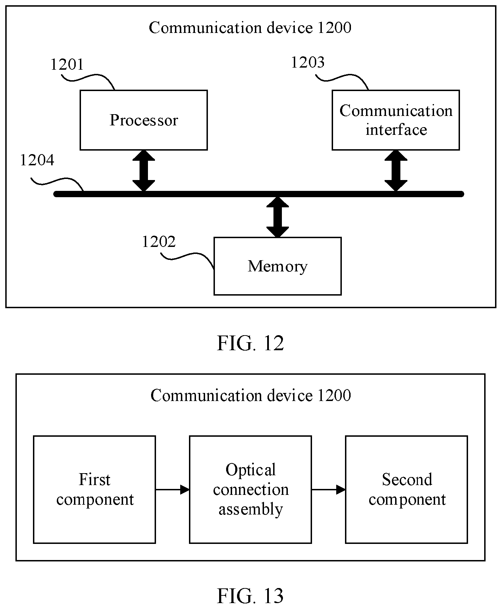

FIG. 12 is a diagram of a specific hardware structure of a communication device 1200 according to this application. The communication device 1200 may perform the foregoing optical communication method and possible implementations of the optical communication method. The communication device 1200 includes: a processor 1201, a memory 1202, a communication interface 1203. The processor 1201, the communication interface 1203, and the memory 1202 may be connected to each other or connected to each other through the bus 1204.

For example, the memory 1202 is configured to store a computer program and data of the communication device 1200. The memory 1202 may include but is not limited to a random access memory (random access memory, RAM), a read-only memory (read-only memory, ROM), an erasable programmable read-only memory (erasable programmable read only memory, EPROM), or compact read-only memory (compact disc read-only memory, CD-ROM).

The communication interface 1203 includes a sending interface and a receiving interface. There may be a plurality of communication interfaces 1203, and the communication interfaces 1203 are configured to support the communication device 1200 in communication, for example, receiving or sending data or a message.

For example, the processor 1201 may be a central processing unit, a digital signal processor, an application-specific integrated circuit, a field programmable gate array or another programmable logic device, a transistor logic device, a hardware component, or any combination thereof. Alternatively, the processor may be a combination implementing a computing function, for example, a combination of one or more microprocessors, or a combination of the digital signal processor and a microprocessor. Alternatively, the processor 1201 may be a general-purpose processor or the like. The processor 1201 may be configured to read a program stored in the memory 1202, so that the communication device 1200 performs the optical communication method described in FIG. 8 and the possible embodiment of FIG. 8.

In a specific implementation, the communication device 1200 includes the optical communication system in the foregoing method embodiment. The optical communication system includes a first component, an optical connection assembly, and a second component. The first component and the second component are connected by the optical connection assembly. For example, refer to FIG. 13. For example, the processor 1201 may be the processor in the execution entity of the foregoing optical communication method. The execution entity may be, for example, the first component in the optical communication system, the second component in the optical communication system, or a module that has a processing capability in the optical communication system other than the first component, the optical connection assembly, and the second component. The processor 1201 may be configured to read a program stored in the memory 1202, so that the communication device 1200 performs the following operations:
controlling the first component to send a first optical signal to the second component by using the optical connection assembly; obtaining an insertion loss variation value of the optical connection assembly based on an optical power variation status of the first optical signal in a transmission process, where the insertion loss variation value indicates variation of an insertion loss of the optical connection assembly compared with a preset insertion loss value; sending an alarm indication when it is determined, based on the insertion loss variation value, thatthe optical connection assembly is abnormal; and when it is determined, based on the insertion loss variation value, that the optical connection assembly is normal, controlling the first component to send a second optical signal to the second component, where an optical power of the second optical signal is greater than an optical power of the first optical signal.

For specific operations and beneficial effect of the units in the communication device 1200 shown in FIG. 12, refer to the corresponding descriptions in FIG. 8 and the possible method embodiment of FIG. 8. Details are not described herein again.

An embodiment of this application further provides another communication device. The communication device includes the optical module described in any one of FIG. 11 and the possible implementation of FIG. 11.

This application further provides another communication device. The communication device includes a first service board, a second service board, and an optical backplane. The first service board and the second service board are connected by the optical backplane. The communication device implements, based on the first service board, the second service board, and the optical backplane, the method described in FIG. 8 and any possible method embodiment thereof. The first service board is the first component described in FIG. 8 and any possible method embodiment thereof; the second service board is the second component described in FIG. 8 and any possible method embodiment thereof; and the optical backplane is the optical connection assembly described in FIG. 8 and any possible method embodiment thereof.

An embodiment of this application further provides a computer-readable storage medium. The computer-readable storage medium stores a computer program. When the computer program is executed by a processor, the method described in FIG. 8 and any possible method embodiment thereof is implemented.

An embodiment of this application further provides a computer program product. When the computer program product is read and executed by a computer, the method described in FIG. 8 and any possible method embodiment thereof can be implemented.

In conclusion, in this solution, detection is performed on the optical connection assembly by using a low-power optical signal. If it is detected that the optical connection assembly is abnormal, an alarm is generated. If it is detected that the optical connection assembly is normal, transmission of a high-power optical signal starts. This avoids a problem that the optical connection assembly is burnt because a high-power optical signal is directly transmitted while an exception of the optical connection assembly is not perceived. In addition, in this solution, an insertion loss variation value of the optical connection assembly is measured based on the optical power variation status of the optical signal in the transmission process, and whether the optical connection assembly is abnormal is determined based on the variation value. Compared with an existing solution in which an instrument is used to detect whether an optical path of an optical connection assembly is abnormal, because manual detection and an expensive detection instrument are not needed in this solution, this solution is labor-saving and has lower costs, and this solution has higher detection accuracy, so that an exception can be detected in a timely manner.

It should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof, without departing from the scope of the technical solutions of embodiments of this application.

## Claims

1. An optical communication method, wherein the method is applied to an optical communication system, the optical communication system comprises a first component, an optical connection assembly, and a second component, and the first component and the second component are connected by the optical connection assembly; and
the method comprises:
controlling the first component to send a first optical signal to the second component through the optical connection assembly;
sending an alarm indication when it is determined, based on an optical power variation status of the first optical signal in a transmission process, that the optical connection assembly is abnormal; and
when it is determined, based on the optical power variation status of the first optical signal in the transmission process, that the optical connection assembly is normal, controlling the first component to send a second optical signal to the second component, wherein an optical power of the second optical signal is greater than an optical power of the first optical signal.

2. The method according to claim 1, wherein the optical power variation status of the first optical signal in the transmission process is obtained by using the following method:
obtaining a first optical power and a second optical power, wherein the first optical power is an optical power of the transmitted first optical signal at a first interface that connects the first component and the optical connection assembly, and the second optical power is an optical power of the transmitted first optical signal at a second interface that connects the second component and the optical connection assembly; and
calculating the variation status based on the first optical power and the second optical power.

3. The method according to claim 2, wherein the first component comprises a first monitor detector; and
the obtaining a first optical power comprises:
calculating the first optical power based on a third optical power and a first fixed value, wherein
the third optical power is an optical power of a third optical signal obtained through detection by the first monitor detector, the third optical signal and the first optical signal are two optical signals obtained through splitting an optical signal in the first component based on powers, and the first fixed value is pre-stored in a register of the optical communication system.

4. The method according to claim 3, wherein
the first fixed value is a value of an inherent relationship between a first target optical power and a second target optical power in the first component, the first target optical power is an optical power of a first target optical signal obtained through detection by the first monitor detector, the second target optical power is an optical power of a transmitted second target optical signal at the first interface, and the first target optical signal and the second target optical signal are two optical signals obtained by splitting the optical signal in the first component based on powers.

5. The method according to claim 2, wherein the first component comprises a light source, the light source comprises a light source chip, the first optical signal is generated by the light source chip in the light source, and an optical power at the first interface of a transmitted optical signal generated by the light source chip is related to a temperature of the light source chip; and
the obtaining a first optical power comprises:
obtaining a current temperature of the light source chip; and
determining the first optical power based on the detected temperature.

6. The method according to claim 5, wherein the optical power at the first interface of the transmitted optical signal generated by the light source chip is further related to a drive current and a drive voltage of the light source chip;
the obtaining a first optical power further comprises:
obtaining a current drive current and a current drive voltage of the light source chip; and
the determining the first optical power based on the detected temperature comprises:
determining the first optical power based on the detected temperature, drive current, and drive voltage.

7. The method according to any one of claims 2 to 6, wherein the second component comprises a second monitor detector; and the obtaining a second optical power comprises:
calculating the second optical power based on a fourth optical power and a second fixed value, wherein
the fourth optical power is an optical power of a fourth optical signal obtained through detection by the second monitor detector, the fourth optical signal is an optical signal obtained by splitting, based on powers, the first optical signal transmitted to the second component, and the second fixed value is pre-stored in the register of the optical communication system.

8. The method according to claim 7, wherein
the second fixed value is a value of an inherent relationship between a third target optical power and a fourth target optical power in the second component, the third target optical power is an optical power of a third target optical signal at the second interface in the second component, the fourth target optical power is an optical power of a fourth target optical signal obtained through detection by the second monitor detector, and the fourth target optical signal is an optical signal obtained by splitting the third target optical signal based on powers.

9. The method according to any one of claims 2 to 8, wherein the calculating the variation status based on the first optical power and the second optical power comprises:
calculating a first insertion loss value of the optical connection assembly based on the first optical power and the second optical power; and
calculating an insertion loss variation value of the optical connection assembly based on the first insertion loss value and the preset insertion loss value of the optical connection assembly, wherein the preset insertion loss value is read from the register of the optical communication system, and the insertion loss variation value indicates the variation status.

10. The method according to claim 1, wherein the optical power variation status of the first optical signal in the transmission process is obtained by using the following method:
calculating an insertion loss variation value of the optical connection assembly based on a fifth optical power, a sixth optical power, a first preset optical power, and a second preset optical power, wherein the insertion loss variation value indicates the variation status, wherein
the fifth optical power is an optical power of a fifth optical signal, wherein the fifth optical signal and the first optical signal are two optical signals obtained through splitting an optical signal in the first component based on powers;
the sixth optical power is an optical power of a sixth optical signal, wherein the sixth optical signal is an optical signal obtained by splitting, based on powers, the first optical signal transmitted to the second component; and
the first preset optical power and the second preset optical power are read from a register of the optical communication system.

11. The method according to claim 10, wherein the first component comprises a first monitor detector;
the fifth optical power is an optical power obtained by performing detection on the fifth optical signal by the first monitor detector; and
the first preset optical power is an optical power obtained in advance through detection by the first monitor detector based on a test optical signal in the first component.

12. The method according to claim 10 or 11, wherein the second component comprises a second monitor detector;
the sixth optical power is an optical power obtained by performing detection on the sixth optical signal by the second monitor detector; and
the second preset optical power is an optical power obtained in advance through detection by the second monitor detector based on the test optical signal transmitted to the second component.

13. The method according to any one of claims 1 to 12, wherein the optical communication system comprises an optical module, the first component is an external laser source ELS of the optical module, and the second component is a silicon photonic chip in the optical module.

14. The method according to any one of claims 1 to 12, wherein the optical communication system comprises a service board, the first component is an external laser source ELS of the service board, the second component is a silicon photonic chip in the service board, and the service board is configured to process a service signal.

15. The method according to any one of claims 1 to 12, wherein the optical communication system comprises a backplane component, the first component is a first service board in the backplane component, the second component is a second service board in the backplane component, and the optical connection assembly comprises an optical backplane in the backplane component; and
the first service board and the second service board are configured to process a service signal, and the optical backplane is configured to implement optical communication between the first service board and the second service board.

16. The method according to any one of claims 1 to 15, wherein the optical connection assembly comprises one or more of an optical fiber, an optical connector, an optical fiber board, an optical-electrical integrated connector, an optical waveguide, or the like.

17. The method according to any one of claims 1 to 16, wherein the first optical signal does not cause damage to the optical communication system.

18. The method according to any one of claims 1 to 17, wherein the optical power of the first optical signal is less than 10 dBm.

19. An optical communication system, wherein the optical communication system comprises:
a control unit, configured to control a first component to send a first optical signal to a second component through an optical connection assembly, wherein the first component and the second component are connected by the optical connection assembly, and the first component, the second component, and the optical connection assembly are components in the optical communication system; and
an alarm unit, configured to send an alarm indication when it is determined, based on an optical power variation status of the first optical signal in a transmission process, that the optical connection assembly is abnormal, wherein
the control unit is further configured to: when it is determined, based on the optical power variation status of the first optical signal in the transmission process, that the optical connection assembly is normal, control the first component to send a second optical signal to the second component, wherein an optical power of the second optical signal is greater than an optical power of the first optical signal.

20. The optical communication system according to claim 19, wherein the optical communication system further comprises a first obtaining unit configured to obtain the optical power variation status of the first optical signal in the transmission process, and the first obtaining unit is specifically configured to:
obtain a first optical power and a second optical power, wherein the first optical power is an optical power of the transmitted first optical signal at a first interface that connects the first component and the optical connection assembly, and the second optical power is an optical power of the transmitted first optical signal at a second interface that connects the second component and the optical connection assembly; and
calculate the variation status based on the first optical power and the second optical power.

21. The optical communication system according to claim 20, wherein the first component comprises a first monitor detector; and
the first obtaining unit is specifically configured to:
calculate the first optical power based on a third optical power and a first fixed value, wherein
the third optical power is an optical power of a third optical signal obtained through detection by the first monitor detector, the third optical signal and the first optical signal are two optical signals obtained through splitting an optical signal in the first component based on powers, and the first fixed value is pre-stored in a register of the optical communication system.

22. The optical communication system according to claim 21, wherein
the first fixed value is a value of an inherent relationship between a first target optical power and a second target optical power in the first component, the first target optical power is an optical power of a first target optical signal obtained through detection by the first monitor detector, the second target optical power is an optical power of a transmitted second target optical signal at the first interface, and the first target optical signal and the second target optical signal are two optical signals obtained by splitting the optical signal in the first component based on powers.

23. The optical communication system according to claim 20, wherein the first component comprises a light source, the light source comprises a light source chip, the first optical signal is generated by the light source chip in the light source, and an optical power at the first interface of a transmitted optical signal generated by the light source chip is related to a temperature of the light source chip; and
the first obtaining unit is specifically configured to:
obtain a current temperature of the light source chip; and
determine the first optical power based on the current temperature.

24. The optical communication system according to claim 23, wherein the optical power at the first interface of the transmitted optical signal generated by the light source chip is further related to a drive current and a drive voltage of the light source chip;
the first obtaining unit is specifically configured to:
obtain a current drive current and a current drive voltage of the light source chip; and
the determining the first optical power based on the detected temperature comprises:
determining the first optical power based on the detected temperature, drive current, and drive voltage.

25. The optical communication system according to any one of claims 20 to 24, wherein the second component comprises a second monitor detector; and the first obtaining unit is specifically configured to:
calculate the second optical power based on a fourth optical power and a second fixed value, wherein
the fourth optical power is an optical power of a fourth optical signal obtained through detection by the second monitor detector, the fourth optical signal is an optical signal obtained by splitting, based on powers, the first optical signal transmitted to the second component, and the second fixed value is pre-stored in the register of the optical communication system.

26. The optical communication system according to claim 25, wherein
the second fixed value is a value of an inherent relationship between a third target optical power and a fourth target optical power in the second component, the third target optical power is an optical power of a third target optical signal at the second interface in the second component, the fourth target optical power is an optical power of a fourth target optical signal obtained through detection by the second monitor detector, and the fourth target optical signal is an optical signal obtained by splitting the third target optical signal based on powers.

27. The optical communication system according to any one of claims 20 to 26, wherein the first obtaining unit is specifically configured to:
calculate a first insertion loss value of the optical connection assembly based on the first optical power and the second optical power; and
calculate an insertion loss variation value of the optical connection assembly based on the first insertion loss value and the preset insertion loss value of the optical connection assembly, wherein the preset insertion loss value is read from the register of the optical communication system, and the insertion loss variation value indicates the variation status.

28. The optical communication system according to claim 19, wherein the optical communication system further comprises a second obtaining unit configured to obtain the optical power variation status of the first optical signal in the transmission process, and the second obtaining unit is specifically configured to:
calculate an insertion loss variation value of the optical connection assembly based on a fifth optical power, a sixth optical power, a first preset optical power, and a second preset optical power, wherein the insertion loss variation value indicates the variation status, wherein
the fifth optical power is an optical power of a fifth optical signal, wherein the fifth optical signal and the first optical signal are two optical signals obtained through splitting an optical signal in the first component based on powers;
the sixth optical power is an optical power of a sixth optical signal, wherein the sixth optical signal is an optical signal obtained by splitting, based on powers, the first optical signal transmitted to the second component; and
the first preset optical power and the second preset optical power are read from a register of the optical communication system.

29. The optical communication system according to claim 28, wherein the first component comprises a first monitor detector;
the fifth optical power is an optical power obtained by performing detection on the fifth optical signal by the first monitor detector; and
the first preset optical power is an optical power obtained in advance through detection by the first monitor detector based on a test optical signal in the first component.

30. The optical communication system according to claim 28 or 29, wherein the second component comprises a second monitor detector;
the sixth optical power is an optical power obtained by performing detection on the sixth optical signal by the second monitor detector; and
the second preset optical power is an optical power obtained in advance through detection by the second monitor detector based on the test optical signal transmitted to the second component.

31. The optical communication system according to any one of claims 19 to 30, wherein the optical connection assembly comprises one or more of an optical fiber, an optical connector, an optical fiber board, an optical-electrical integrated connector, an optical waveguide, or the like.

32. A communication device, wherein the communication device comprises an optical communication system, and the optical communication system is the optical communication system according to any one of claims 19 to 31.

33. A communication device, wherein the communication device comprises a first service board, a second service board, and an optical backplane, and the first service board and the second service board are connected by the optical backplane; and
the communication device implements the optical communication method according to any one of claims 1 to 12 based on the first service board, the second service board, and the optical backplane, wherein
the first service board is the first component in the optical communication method according to any one of claims 1 to 12, the second service board is the second component in the optical communication method according to any one of claims 1 to 12, and the optical backplane is the optical connection assembly in the optical communication method according to any one of claims 1 to 12.
